# EUROPEAN PATENT SPECIFICATION

(11) **EP 1 539 560 B1**
(45) Date of publication and mention of the grant of the patent: **19.09.2007**
(21) Application number: 03738859.2
(22) Date of filing: 11.07.2003
(51) Int. Cl.: B62D 6/02

(54) **A METHOD, DEVICE AND COMPUTER PROGRAM PRODUCT FOR CONTROLLING THE STEERING OF A VEHICLE**
VERFAHREN, VORRICHTUNG UND RECHNERPROGRAMMPRODUKT ZUR STEUERUNG DER LENKUNG EINES FAHRZEUGS
PROCEDE, DISPOSITIF ET PRODUIT DE PROGRAMME INFORMATIQUE PERMETTANT DE COMMANDER LA DIRECTION D'UN VEHICULE

(30) Priority: 13.09.2002 SE 0202739
(43) Date of publication of application: 15.06.2005
(73) Proprietor: Volvo Construction Equipment Holding Sweden AB, 631 85 Eskilstuna (SE)
(72) Inventor: VIGHOLM, Bo, S-640 40 Stora Sundby (SE)
(74) Representative: Fröhling, Werner Otto
(86) International application number: PCT/SE2003/001206
(87) International publication number: WO 2004/024537

(56) References cited:
- EP-A1- 0 596 167
- EP-A1- 0 722 878
- WO-A1-00/37300
- SE-B- 407 922
- US-B1- 6 173 221

## Description

### FIELD OF THE INVENTION AND PRIOR ART

The present invention relates to a method for controlling a vehicle according to the preamble of claim 1. The invention also relates to a device for controlling a vehicle according to the preamble of claim 14 which is described in US-A-6173221.

The present invention relates primarily to a working machine in the form of a wheel loader. The wheel loader comprises a front and a rear body part, which parts are interconnected in an articulated manner and each have a drive axle. The body parts are rotatable relative to one another around an articulation via two hydraulic cylinders arranged between the two parts. Below, "steering angle" means the mutual adjustment of the two drive axles. The hydraulic cylinders are therefore arranged for steering, that is to say turning, the wheel loader. ,

A wheel loader usually has normal steering-wheel steering but may in parallel be equipped with lever steering. Using the steering-wheel steering, the driver regulates mechanically a first hydraulic valve which in turn transmits hydraulic energy to the hydraulic cylinders. When lever steering is used, hydraulic energy is instead transmitted to the hydraulic cylinders via a second hydraulic valve, but this second hydraulic valve is controlled by electric signals, that is to say, when the lever is moved, an electric signal is generated, which controls the second hydraulic valve.

When lever steering is used, the speed of change of the steering angle is controlled by the position of the lever. A large lever deflection gives a rapid change of steering angle, and a small lever deflection gives a slow change of steering angle. When the lever is guided back into the neutral position after a deflection, the steering angle brought about is maintained.

The steering wheel is usually used for transport, and the lever is usually used for work at lower speeds such as, for example, loading a truck, in order to increase driver comfort. In some applications, however, the driver may prefer to use the lever for transport as well. Transport and loading are two different handling operations of the wheel loader which place very different demands on the vehicle. During a loader cycle, the wheel loader is driven forward and backward for short distances and is turned in the meantime in order to load and unload the bucket.

### SUMMARY OF THE INVENTION

A first object of the invention is to provide a method for controlling a vehicle which remedies problems associated with controlling the vehicle in different applications.

This object is achieved by a method according to the characterizing part of claim 1.

According to a preferred embodiment of the invention, the steering angle speed is changed with time for at least a first predetermined speed range. In other words, use is made of what is known as a ramp. The ramp may be of a number of different types, for example linear, progressive, degressive or step-shaped. According to a preferred example, the change of the steering angle speed is increased proportionally with time over said first speed range.

According to another preferred embodiment of the invention, the steering angle speed is changed directly corresponding to the movement of the control element for at least a second predetermined speed range. The expression direct control means a method which may correspond to mechanical-hydraulic transmission without electric control. In other words, the signal from the lever is not manipulated in connection with changing the steering angle speed. On the other hand, the amplitude of the signal can be amplified or attenuated. The first predetermined speed range is preferably lower than the second predetermined speed range.

This first speed range is preferably a lower speed range, corresponding to loading mode, for example from 0 km/h to 10 km/h, and the second speed range is preferably a higher speed range, corresponding to transport mode, for example from 10 km/h upward.

A second object of the invention is to produce a device for controlling a vehicle which remedies problems associated with controlling the vehicle in different applications.

This is achieved by a device according to the characterizing part of claim 14.

Further preferred embodiments and advantages of the invention emerge from the other dependent claims and also from the description below.

### BRIEF DESCRIPTION OF FIGURES

The invention will be described in greater detail below, with reference to the embodiment shown in the accompanying drawings, in which
- FIG. 1: shows a diagrammatic view from above of a wheel loader;
- FIG. 2: shows a device for controlling a vehicle;
- FIGS 3 and 4: show graphs of different examples of ramps for steering angle speed regulation, and
- FIG. 5: shows diagrammatically an alternative device for controlling the vehicle.

### DETAILED DESCRIPTION OF PREFERRED EMBODIMENTS

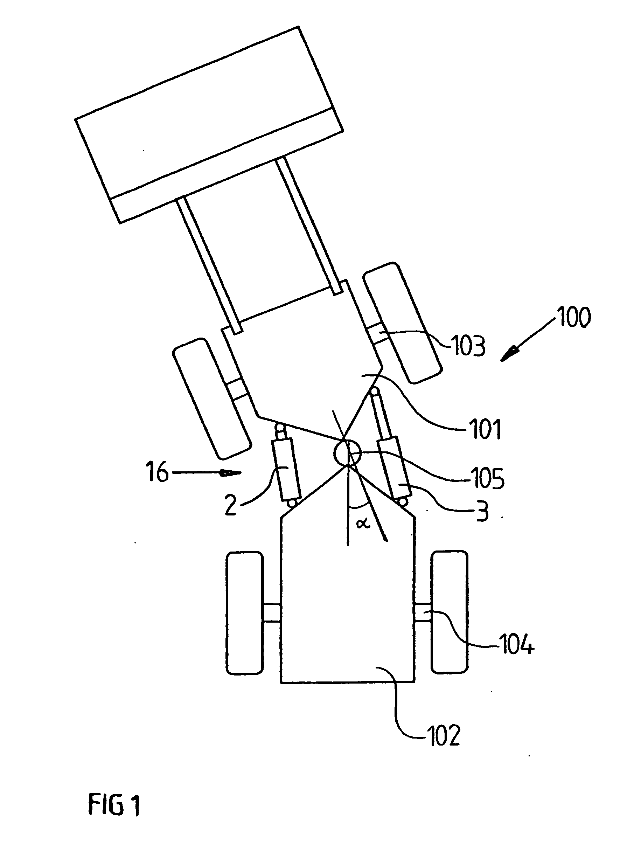

Fig. 1 shows a diagrammatic view from above of a heavy-duty vehicle in the form of a wheel loader 100. The wheel loader 100 comprises a front and a rear part 101, 102, which parts each have a wheel axle 103, 104. The vehicle parts 101, 102 are interconnected in an articulated manner and the parts are rotatable relative to one another around an articulation 105 via means 16 for turning the vehicle.

Said turning means 16 comprise two hydraulic cylinders 2, 3 which are arranged between the two parts. In Figure 1, the vehicle parts are rotated by an angle α relative to one another.

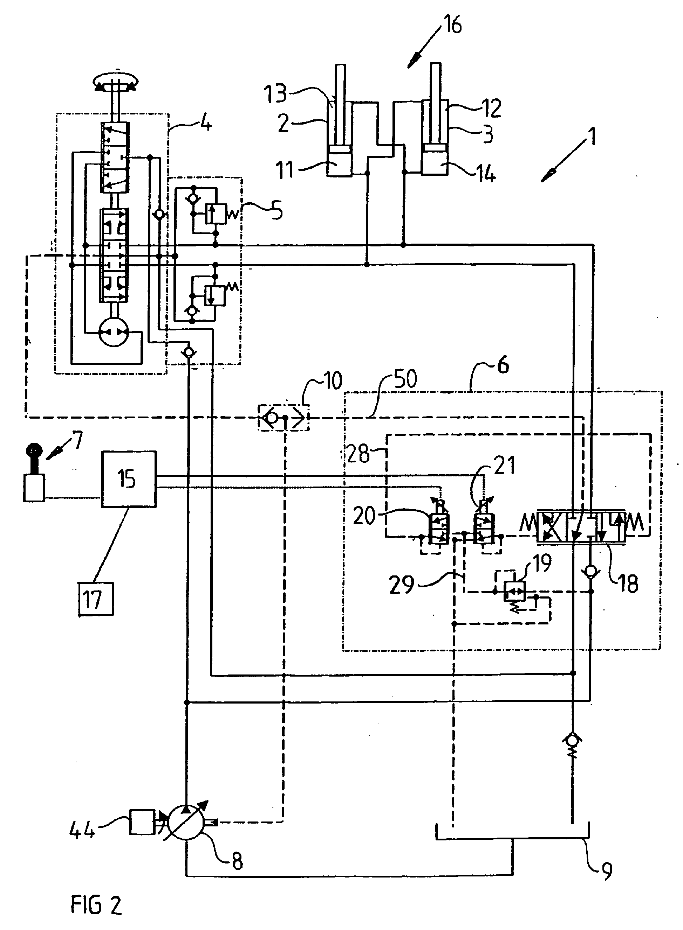

Fig. 2 shows a device 1 for regulating the two hydraulic cylinders 2, 3 of the wheel loader 100. The lines marked by solid lines indicate main lines, and the lines marked by dashed lines indicate pilot lines for regulating various components in the system.

The system comprises a first control valve 4 which is regulated mechanically by the steering wheel of the vehicle. The system also comprises a second control valve 6 which is controlled electronically via a control element 7 in the form of a lever or a joystick. Control via the lever 7 is shown diagrammatically by dotted lines.

The system is load-sensing (LS) and comprises a variable displacement pump 8 and a tank 9. The pump 8 is driven by the propulsion engine 44 of the vehicle, in the form of a diesel engine. The pump 8 senses the pressure (an LS signal) from the steering cylinders 2, 3 via a shuttle valve 10 and via the control valve 4, 6 which is activated. The pump then sets a pressure which is a certain number of bar higher than the pressure of the steering cylinders. This brings about an oil flow out to the steering cylinders 2, 3, the level of which depends on the extent to which the activated control valve 4, 6 is operated.

The hydraulic cylinders 2, 3 are adapted in such a way that the piston side 11 of the first hydraulic cylinder 2 and the piston-rod side 12 of the second hydraulic cylinder 3 are connected to the pump 8 for steering the vehicle to the right, and the piston-rod side 13 of the first hydraulic cylinder 2 and the piston side 14 of the second hydraulic cylinder 3 are connected to the pump for steering the vehicle to the left.

The connection of the hydraulic cylinders 2, 3 to the pump 8 and thus the regulation of the hydraulic cylinders can be carried out either via steering-wheel steering by means of the control valve 4 or via lever steering by means of the control valve 6.

The design and function of the first control valve 4 are previously known and are therefore not described in detail here.

The second control valve 6 comprises a directional valve 18 which determines the steering direction and also the control flow, and a pressure-reducing valve 19 which ensures that the pilot pressure is limited to a defined level, irrespective of the pump pressure. The control valve 6 also comprises two electrically controlled valves 20, 21 which are regulated indirectly via an electric signal from the lever 7. The electrically controlled valves 20, 21 are arranged in parallel with one another on a line 28. The line 28 is also connected to the directional valve 18 on both its sides for movement thereof counter to spring force. The pump 8 is connected to the electric valves 20, 21 via a line 29 which is connected to the line 28 between the electric valves. The result of this is that activation of the right-hand valve 21, via the lever 7, produces an oil pressure on the directional valve 18 for movement of the latter to the right in the figure counter to a spring force, and activation of the left-hand valve 20, via the lever 7, produces an oil pressure on the directional valve 18 for movement of the latter to the left in the figure counter to a spring force.

For steering to the right, the electrically controlled right-hand valve 21 is therefore activated, which then applies an oil pressure, which is proportional to the electric signal, to the directional valve 18. The higher the electric signal (oil pressure), the more the directional valve 18 is operated, and a greater control flow is thus obtained. For steering to the left, the electrically controlled left-hand valve 20 is therefore activated in a corresponding way.

When the control valve 6 is not activated, the LS signal is connected from the shuttle valve 10 (see line 50) to the tank 9 via the directional valve 18 and is thus in principle pressureless. The same applies for the first control valve 4, which also connects the LS signal to the tank 9 when it is not activated. The pump 8 is thus adjusted down and maintains only a low pressure. The two electrically controlled valves 20, 21 are therefore arranged in such a way that activation of one valve results in movement of the directional valve 18 in one direction, and activation of the other valve results in movement of the directional valve 18 in the other direction.

In order to prevent negative pressures and pressures exceeding a defined maximum pressure in the system, the system comprises a top-up valve and a choke valve, which are indicated together by reference number 5. The function of the top-up valve and the choke valve is previously known and will therefore not be described in detail here.

The device 1 also comprises a control unit 15 connected to the lever 7. The control unit 15 may also be called, for example, a computer unit or CPU (Control Power Unit). By means of the control unit 15, the control valve 6 is regulated by an electric signal. The control unit 15 is therefore connected to the hydraulic cylinders 2, 3 via the control valve 6.

The device also comprises a system 17 for sensing the speed of the vehicle. The sensing system comprises, for example, one or more sensors for sensing the speed of rotation of a rotating part in the transmission of the vehicle. This is known per se and will not be described in greater detail here. This sensing system 17 is connected to the control unit 15.

The control unit 15 is adapted to define the steering angle speed as a function of the sensed vehicle speed. The signal of the lever 7 can therefore be manipulated in the control unit 15. The control unit 15 has the machine speed and the lever position as input signals and can, for example, define extreme values for the steering deflection and ramps in order to achieve the steering deflection. According to a preferred embodiment, the size of the ramps is a function of the machine speed. If appropriate, the deflection limit, that is to say a maximum permitted steering deflection, can also be a function of the machine speed.

The steering angle value is therefore defined in time order after the sensing of the movement of the control lever.

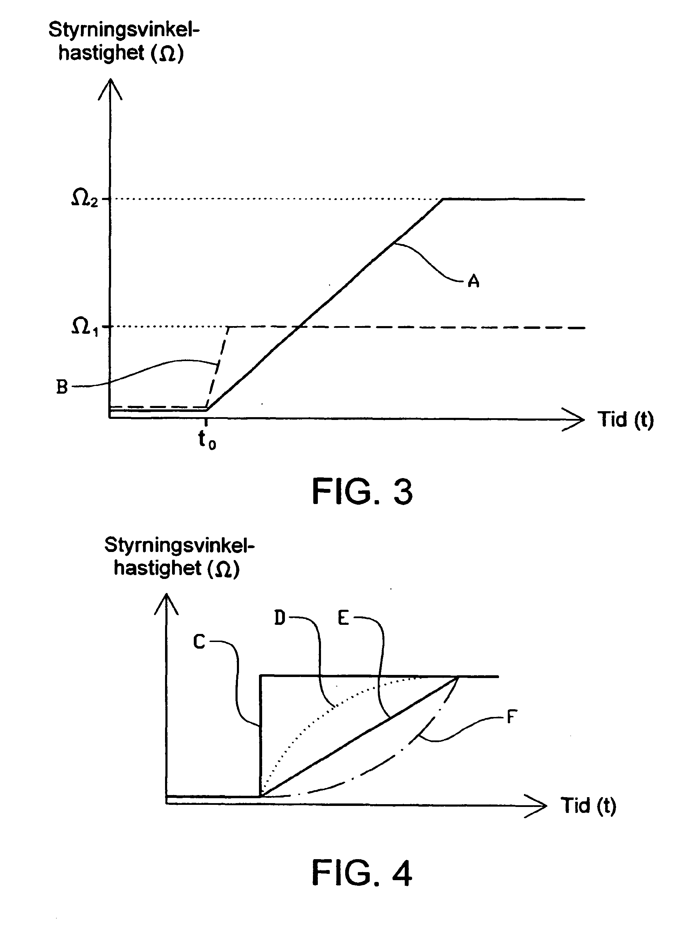

Figure 3 shows two curves, or ramps, A, B for regulating the steering angle speed as a function of time. Ramp A is used for low vehicle speed, and ramp B for high vehicle speed. Ramp A has a large amplification (high final steering angle speed) and a long ramp time. This means that a certain lever deflection gives a relatively great steering deflection which feels relatively gentle for the driver. Ramp B has a low amplification (low final steering angle speed) and a short ramp time. This means that said lever deflection gives a steering deflection which corresponds to the lever movement and that it takes place quickly, that is to say a short delay. Ramps A and B are linear, that is to say the steering angle speed is increased proportionally with increased time to a maximum value.

Figure 4 shows various examples of characteristics of ramps for changing the steering angle speed, namely step-shaped C, degressive D, linear E and progressive F. The rise time can be changed proportionally to the vehicle speed, for example.

According to a preferred example, use is made of a step-shaped ramp at high speeds and a linear ramp at low speeds.

The computer unit of the vehicle comprises a memory which in turn comprises a computer program product with computer program segments, or a program code, for performing all the steps according to the control method when the program is run. The computer program product can be the actual software for carrying out the method, or hardware on which the software is stored, that is to say a disk or the like.

The speed of the vehicle means speed in the longitudinal direction of the vehicle, that is to say both forward and backward.

The above can also be applied to control apparatuses which do not have a linear movement pattern, such as an angular control apparatus (for example a steering wheel or crank) with sensors, or electric transducers, which function in a similar way to the lever described.

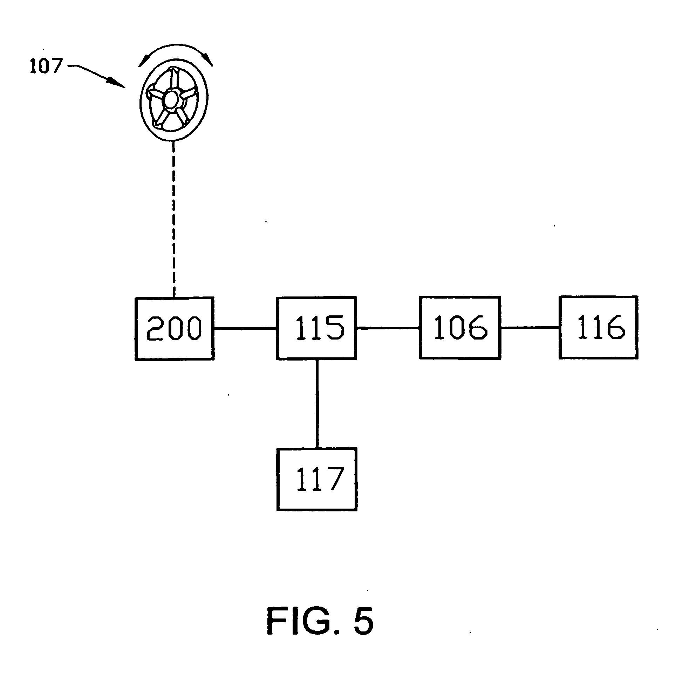

Figure 5 illustrates diagrammatically such an embodiment where the control element consists of a steering wheel 107. The movements of the steering wheel 107 are detected by one or more sensor(s) 200 connected to a control unit 115. A system 117 for sensing the speed of the vehicle is also connected to the control unit 115. A second control valve 106 is controlled electronically from the control unit 115. The second control valve 106 in turn regulates in the way described above turning means 116 in the form of the two hydraulic steering cylinders 2, 3 which are arranged between the two vehicle parts.

According to a first alternative, the sensors 200 measure angular positions, and the control unit 115 comprises a time counter by means of which the control unit can convert the angular positions measured into a steering wheel speed. According to a second alternative, the steering wheel speed is sensed directly, for example via a pulse meter connected to the control unit 115. The steering angle speed, that is to say the speed at which the steering angle of the vehicle is changed, is then controlled depending on the steering wheel speed.

It is therefore possible to apply the examples described above for lever steering for steering-wheel steering as well. A certain steering wheel speed can therefore correspond to a certain speed of change of steering angle within a certain vehicle speed range. The same steering wheel speed can then correspond to a lower speed of change of steering angle within a second, higher vehicle speed range. In a corresponding way, it is possible, for example, for the ramps according to Figures 3 and 4 to be used in order to achieve different changes of steering angle speed.

The embodiment for electronic lever steering according to Figure 2 can of course be combined with the embodiment for electronic steering-wheel steering according to Figure 5.

The invention is not to be regarded as being limited to the illustrative embodiments described above, but a number of further variants and modifications are conceivable within the scope of the following patent claims. The invention can also, for example, be applied to vehicles other than wheel loaders, such as an articulated or frame-steered vehicle, also known as a dumper.

## Claims

1. A method for controlling a vehicle (100), operation of a control element (7, 107) by the driver of the vehicle being sensed, and the steering angle of the vehicle being regulated depending on the operation of the control element, wherein the speed of the vehicle is sensed, a procedure for changing the steering angle of the vehicle is defined based on the sensed operation of the control element and the sensed vehicle speed, and the steering angle of the vehicle is regulated according to the defined procedure **characterized in that** the speed of change of the steering angle is defined as a function of the sensed vehicle speed, that the speed of change of the steering angle is defined in an inverse relationship relative to the sensed vehicle speed, that the procedure comprises a ramp (A, B, C, D, E) at its start in order to reach a defined speed of change of the steering angle and that the ramp (A, B, C, D, E) is shorter in terms of time for a sensed vehicle speed within a higher vehicle speed range than within a lower vehicle speed range.

2. The method as claimed in claim 1, **characterized in that** the position of the control element (7) is sensed, and **in that** the procedure for changing the steering angle of the vehicle is defined directly based on the sensed position of the control element (7).

3. The method as claimed in claim 1, **characterized in that** the speed with which the control element (107) is regulated is determined, and **in that** the procedure for changing the steering angle of the vehicle is defined based on the determined speed of the control element (107).

4. The method as claimed in any one of the preceding claims, **characterized in that** the slope of the ramp (A, B, C, D, E) is different for at least two different vehicle speed ranges.

5. The method as claimed in any one of the preceding claims, **characterized in that** the steering angle speed is changed with time for at least a first predetermined speed range.

6. The method as claimed in claim 5, **characterized in that** the change of the steering angle speed is increased proportionally with time over said first speed range.

7. The method as claimed in any one of the preceding claims, **characterized in that** the steering angle speed is changed directly corresponding to the movement of the control element for at least a second predetermined speed range.

8. The method as claimed in claim 5 or 6, and claim 7, **characterized in that** the first predetermined speed range is lower than the second predetermined speed range.

9. The method as claimed in any one of the preceding claims, **characterized in that**, to bring about regulation of the steering angle of the vehicle, the position of a directional valve (18) is regulated, which directional valve is adapted for regulating the supply of a fluid from a pump (8) to means (16, 116, 2, 3) for turning the vehicle.

10. The method as claimed in any one of the preceding claims, **characterized in that** the steering angle of the vehicle is regulated via a system of at least one hydraulic cylinder (2, 3).

11. The method as claimed in claim 10, **characterized in that** said hydraulic cylinder system is arranged between a front and a rear body part (101, 102) of the vehicle, which body parts each comprise at least one wheel axle (103, 104) and are arranged rotatably relative to one another.

12. The method as claimed in any one of the preceding claims, **characterized in that** the vehicle consists of a working machine.

13. The method as claimed in any one of the preceding claims, **characterized in that** the vehicle consists of a wheel loader.

14. A device for controlling a vehicle (100) comprising a control element (7, 107) for operation by the driver of the vehicle, means (16, 116, 2, 3) for turning the vehicle and a control unit (15, 115) connected to the control element and said turning means for regulating the steering angle of the vehicle depending on the operation of the control element, wherein the device comprises a system (17, 117) for sensing the speed of the vehicle, the control unit (15, 115) is connected to the sensing system, and the control unit is adapted to define a procedure for changing the steering angle of the vehicle based on the sensed operation of the control element and the sensed vehicle speed and to cause said turning means (16, 116, 2, 3) to regulate the steering angle of the vehicle according to the defined procedure, **characterized in that** the control unit (15) is adapted to define the speed of change of the steering angle as a function of the sensed vehicle speed, that the control unit (15) is adapted to define the speed of change of the steering angle in an inverse relationship relative to the sensed vehicle speed, that the control unit (15, 115) is adapted to use a ramp (A, B, C, D, E) at the start of the procedure in order to reach a defined speed of change of the steering angle, and that the ramp (A, B, C, D, E) is shorter in terms of time for a sensed vehicle speed within a higher vehicle speed range than within a lower vehicle speed range.

15. The control device as claimed in claim 14, **characterized in that** the device comprises a sensor for sensing the position of the control element (7), and **in that** the control unit (15) is adapted to define the procedure for changing the steering angle of the vehicle directly based on the sensed position of the control element (7).

16. The control device as claimed in claim 14 or 15, **characterized in that** the device comprises means for determining the speed with which the control element (107) is regulated, and **in that** the control unit (115) is adapted to define the procedure for changing the steering angle of the vehicle based on the determined speed of the control element (107).

17. The control device as claimed in any one of claims 14-16, **characterized in that** the ramp (A, B, C, D, E) is of different length in terms of time for different vehicle speed ranges.

18. The control device as claimed in any one of claims 14-17, **characterized in that** the control unit (15) is adapted to change the steering angle speed with time for at least a first predetermined speed range.

19. The control device as claimed in claim 18, **characterized in that** the control unit (15) is adapted to increase the change of the steering angle speed proportionally with time over said first speed range.

20. The control device as claimed in any one of claims 14-19, **characterized in that** the control unit (15) is adapted to change the steering angle speed directly corresponding to the movement of the control element for at least a second predetermined speed range.

21. The control device as claimed in claim 18 or 19, and 20, **characterized in that** the first predetermined speed range is lower than the second predetermined speed range.

22. The control device as claimed in any one of claims 14-21, **characterized in that** the control device comprises a directional valve (18) which is adapted for regulating the supply of a fluid from a pump (8) to said turning means (16, 116, 2, 3), and **in that** the control unit (15) is connected to the directional valve for regulating its position for the purpose of regulating the steering angle of the vehicle.

23. The control device as claimed in any one of claims 14-22, **characterized in that** said turning means (16, 116) comprise a system of at least one hydraulic cylinder (2, 3) for changing the steering angle.

24. The control device as claimed in claim 23, **characterized in that** said hydraulic cylinder system (2, 3) is arranged between a front and a rear body part (101, 102) of the vehicle, which body parts each comprise at least one wheel axle (103, 104) and are arranged rotatably relative to one another.

25. The control device as claimed in any one of claims 14-24, **characterized in that** the control element (7) consists of a control lever.

26. The control device as claimed in any one of claims 14-25, **characterized in that** the control element (7) consists of an element intended for rotation, such as a steering wheel.

27. A working machine, **characterized in that** it comprises a control device as claimed in any one of claims 14-26.

28. A wheel loader, **characterized in that** it comprises a control device as claimed in any one of claims 14-26.

29. A computer program product comprising computer program segments for causing the control unit of the vehicle to perform the steps as claimed in any one of claims 1-13.

## Patentansprüche

1. Verfahren zur Steuerung eines Fahrzeugs (100), wobei die Betätigung eines Steuerelements (7, 107) durch den Fahrer des Fahrzeugs erfasst wird und der Lenkwinkel des Fahrzeugs abhängig von der Betätigung des Steuerelements geregelt wird, wobei die Geschwindigkeit des Fahrzeugs erfasst wird, ein Vorgang zur Veränderung des Lenkwinkels des Fahrzeugs auf der Basis der erfassten Betätigung des Steuerelements und der erfassten Fahrzeuggeschwindigkeit definiert wird, und der Lenkwinkel des Fahrzeugs dem definierten Vorgang entsprechend geregelt wird, **dadurch gekennzeichnet, dass** die Geschwindigkeit der Veränderung des Lenkwinkels als Funktion der erfassten Fahrzeuggeschwindigkeit definiert wird, dass die Geschwindigkeit der Veränderung des Lenkwinkels in einer inversen Beziehung bezüglich der erfassten Fahrzeuggeschwindigkeit definiert wird, dass der Vorgang eine Rampe (A, B, C, D, E) an seinem Beginn umfasst, um eine definierte Geschwindigkeit der Veränderung des Lenkwinkels zu erreichen, und dass die Rampe (A, B, C, D, E) bei einer erfassten Fahrzeuggeschwindigkeit innerhalb eines höheren Fahrzeuggeschwindigkeitsbereichs zeitlich kürzer ist als innerhalb eines niedrigeren Fahrzeuggeschwindigkeitsbereichs.

2. Verfahren nach Anspruch 1, **dadurch gekennzeichnet, dass** die Position des Steuerelements (7) erfasst wird, und dass der Vorgang zur Veränderung des Lenkwinkels des Fahrzeugs direkt auf der Basis der erfassten Position des Steuerelements (7) definiert wird.

3. Verfahren nach Anspruch 1, **dadurch gekennzeichnet, dass** die Geschwindigkeit bestimmt wird, mit der das Steuerelement (107) geregelt wird, und dass der Vorgang zur Veränderung des Lenkwinkels des Fahrzeugs auf der Basis der bestimmen Geschwindigkeit des Steuerelements (107) definiert wird.

4. Verfahren nach einem der vorhergehenden Ansprüche, **dadurch gekennzeichnet, dass** die Neigung der Rampe (A, B, C, D, E) bei wenigstens zwei unterschiedlichen Fahrzeuggeschwindigkeitsbereichen unterschiedlich ist.

5. Verfahren nach einem der vorhergehenden Ansprüche, **dadurch gekennzeichnet, dass** die Lenkwinkelgeschwindigkeit bei wenigstens einem ersten vorher bestimmten Geschwindigkeitsbereich mit der Zeit verändert wird.

6. Verfahren nach Anspruch 5, **dadurch gekennzeichnet, dass** die Veränderung der Lenkwinkelgeschwindigkeit über den ersten Geschwindigkeitsbereich mit der Zeit proportional erhöht wird.

7. Verfahren nach einem der vorhergehenden Ansprüche, **dadurch gekennzeichnet, dass** die Lenkwinkelgeschwindigkeit direkt der Bewegung des Betätigungselements entsprechend bei wenigstens einem zweiten vorher bestimmten Geschwindigkeitsbereich verändert wird.

8. Verfahren nach Anspruch 5 oder 6 und Anspruch 7, **dadurch gekennzeichnet, dass** der erste vorher bestimmte Geschwindigkeitsbereich niedriger ist als der zweite vorher bestimmte Geschwindigkeitsbereich.

9. Verfahren nach einem der vorhergehenden Ansprüche, **dadurch gekennzeichnet, dass** zur Durchführung der Regelung des Lenkwinkels des Fahrzeugs die Position eines Wegeventils (18) geregelt wird, wobei das Regelventil zur Regelung der Zufuhr eines Fluids von einer Pumpe (8) zu einer Einrichtung (16, 116, 2, 3) für eine Kurvenfahrt des Fahrzeugs angepasst ist.

10. Verfahren nach einem der vorhergehenden Ansprüche, **dadurch gekennzeichnet, dass** der Lenkwinkel des Fahrzeugs über ein System mit wenigstens einem Hydraulikzylinder (2, 3) geregelt wird.

11. Verfahren nach Anspruch 10, **dadurch gekennzeichnet, dass** das Hydraulikzylindersystem zwischen einem vorderen und einem hinteren Karosserieteil (101, 102) des Fahrzeugs angeordnet ist, wobei die Karosserieteile jeweils wenigstens eine Radachse (103, 104) umfassen und relativ zueinander drehbar angeordnet sind.

12. Verfahren nach einem der vorhergehenden Ansprüche, **dadurch gekennzeichnet, dass** das Fahrzeug aus einer Arbeitsmaschine besteht.

13. Verfahren nach einem der vorhergehenden Ansprüche, **dadurch gekennzeichnet, dass** das Fahrzeug aus einem Radlader besteht.

14. Vorrichtung zur Steuerung eines Fahrzeugs (100) mit einem Steuerelement (7, 107) zur Betätigung durch den Fahrer des Fahrzeugs, einer Einrichtung (16, 116, 2, 3) für eine Kurvenfahrt des Fahrzeugs, und einer Steuereinheit (15, 115), die für eine Regelung des Lenkwinkels des Fahrzeugs abhängig von der Betätigung des Steuerelements mit dem Steuerelement und der Kurvenfahrteinrichtung verbunden ist, wobei die Vorrichtung ein System (17, 117) zur Erfassung der Geschwindigkeit des Fahrzeugs umfasst, die Steuereinheit (15, 115) mit dem Erfassungssystem verbunden ist, und die Steuereinheit zur Definierung eines Vorgangs zur Veränderung des Lenkwinkels des Fahrzeugs auf der Basis der erfassten Betätigung des Steuerelements und der erfassten Fahrzeuggeschwindigkeit und dazu angepasst ist, dass die Kurvenfahrteinrichtung (16, 116, 2, 3) den Lenkwinkel des Fahrzeugs dem definierten Vorgang entsprechend regelt, **dadurch gekennzeichnet, dass** die Steuereinheit (15) zur Definierung der Geschwindigkeit der Veränderung des Lenkwinkels als Funktion der erfassten Fahrzeuggeschwindigkeit angepasst ist, dass die Steuereinheit (15) zur Definition der Geschwindigkeit der Veränderung des Lenkwinkels in einer inversen Beziehung bezüglich der erfassten Fahrzeuggeschwindigkeit angepasst ist, dass die Steuereinheit (15, 115) zur Verwendung einer Rampe (A, B, C, D, E) bei Beginn des Vorgangs angepasst ist, um eine definierte Geschwindigkeit der Veränderung des Lenkwinkels zu erreichen, und dass die Rampe (A, B, C, D, E) bei einer erfassten Fahrzeuggeschwindigkeit innerhalb eines höheren Fahrzeuggeschwindigkeitsbereichs zeitlich kürzer ist als innerhalb eines niedrigeren Fahrzeuggeschwindigkeitsbereichs.

15. Steuervorrichtung nach Anspruch 14, **dadurch gekennzeichnet, dass** die Vorrichtung einen Sensor zur Erfassung der Position des Steuerelements (7) umfasst, und dass die Steuereinheit (15) zur Definierung des Vorgangs zur Veränderung des Lenkwinkels des Fahrzeugs direkt auf der Basis der erfassten Position des Steuerelements (7) angepasst ist.

16. Steuervorrichtung nach Anspruch 14 oder 15, **dadurch gekennzeichnet, dass** die Vorrichtung eine Einrichtung zur Bestimmung der Geschwindigkeit umfasst, mit der das Steuerelement (107) geregelt wird, und dass die Steuereinheit (115) zur Definierung des Vorgangs zur Veränderung des Lenkwinkels des Fahrzeugs auf der Basis der bestimmten Geschwindigkeit des Steuerelements (107) angepasst ist.

17. Steuervorrichtung nach einem der Ansprüche 14 bis 16, **dadurch gekennzeichnet, dass** die Rampe (A, B, C, D, E) bei unterschiedlichen Fahrzeuggeschwindigkeitsbereichen zeitlich unterschiedlich lang ist.

18. Steuervorrichtung nach einem der Ansprüche 14 bis 17, **dadurch gekennzeichnet, dass** die Steuereinheit (15) zur Veränderung der Lenkwinkelgeschwindigkeit mit der Zeit bei wenigstens einem ersten vorher bestimmten Geschwindigkeitsbereich angepasst ist.

19. Steuervorrichtung nach Anspruch 18, **dadurch gekennzeichnet, dass** die Steuereinheit (15) zur Erhöhung der Veränderung der Lenkwinkelgeschwindigkeit proportional mit der Zeit über einen ersten Geschwindigkeitsbereich angepasst ist.

20. Steuervorrichtung nach einem der Ansprüche 14 bis 19, **dadurch gekennzeichnet, dass** die Steuereinheit (15) zur Veränderung der Lenkwinkelgeschwindigkeit direkt entsprechend der Bewegung des Steuerelements bei wenigstens einem zweiten vorher bestimmten Geschwindigkeitsbereich angepasst ist.

21. Steuervorrichtung nach Anspruch 18 oder 19 und 20, **dadurch gekennzeichnet, dass** der erste vorher bestimmte Geschwindigkeitsbereich niedriger ist als der zweite vorher bestimmte Geschwindigkeitsbereich.

22. Steuervorrichtung nach einem der Ansprüche 14 bis 21, **dadurch gekennzeichnet, dass** die Steuervorrichtung ein Wegeventil (18) umfasst, das zur Regelung der Zufuhr eines Fluids von einer Pumpe (8) zu der Kurvenfahrteinrichtung (16, 116, 2, 3) angepasst ist, und dass die Steuereinheit (15) mit dem Wegeventil zur Regelung seiner Position verbunden ist, um den Lenkwinkel des Fahrzeugs zu regeln.

23. Steuervorrichtung nach einem der Ansprüche 14 bis 22, **dadurch gekennzeichnet, dass** die Kurvenfahrteinrichtung (16, 116) ein System von wenigstens einem Hydraulikzylinder (2, 3) zur Veränderung des Lenkwinkels umfasst.

24. Steuervorrichtung nach Anspruch 23, **dadurch gekennzeichnet, dass** das Hydraulikzylindersystem (2, 3) zwischen einem vorderen und einem hinteren Karosserieteil (101, 102) des Fahrzeugs angeordnet ist, wobei die Karosserieteile jeweils wenigstens eine Radachse (103, 104) umfassen und relativ zueinander drehbar angeordnet sind.

25. Steuervorrichtung nach einem der Ansprüche 14 bis 24, **dadurch gekennzeichnet, dass** das Steuerelement (7) aus einem Steuerhebel besteht.

26. Steuervorrichtung nach einem der Ansprüche 14 bis 25, **dadurch gekennzeichnet, dass** das Steuerelement (7) aus einem Element besteht, das für eine Drehung bestimmt ist, wie z.B. einem Lenkrad.

27. Arbeitsmaschine, **dadurch gekennzeichnet, dass** sie eine Steuervorrichtung nach einem der Ansprüche 14 bis 26 umfasst.

28. Radlader, **dadurch gekennzeichnet, dass** er eine Steuervorrichtung nach einem der Ansprüche 14 bis 26 umfasst.

29. Computerprogrammerzeugnis mit Computerprogrammabschnitten, die die Steuereinheit des Fahrzeugs dazu bringen, die Schritte nach einem der Ansprüche 1 bis 13 durchzuführen.

## Revendications

1. Procédé pour commander un véhicule (100), l'actionnement d'un élément de commande (7, 107) par le conducteur du véhicule étant détecté, et l'angle de braquage du véhicule étant régulé en fonction de l'actionnement de l'élément de commande, dans lequel la vitesse du véhicule est détectée, un processus pour changer l'angle de braquage du véhicule est défini sur la base de l'actionnement détecté de l'élément de commande et de la vitesse de véhicule détectée, et l'angle de braquage du véhicule est régulé conformément au processus défini, **caractérisé en ce que** la vitesse de changement de l'angle de braquage est définie en fonction de la vitesse de véhicule détectée, **en ce que** la vitesse de changement de l'angle de braquage est définie selon une relation inverse par rapport à la vitesse de véhicule détectée, **en ce que** le processus comporte une rampe (A, B, C, D, E) à son début afin d'atteindre une vitesse de changement définie de l'angle de braquage et **en ce que** la rampe (A, B, C, D, E) est plus courte en termes de temps pour une vitesse de véhicule détectée dans une plage de vitesse de véhicule plus élevée que dans une plage de vitesse de véhicule plus basse.

2. Procédé selon la revendication 1, **caractérisé en ce que** la position de l'élément de commande (7) est détectée, et **en ce que** le processus pour changer l'angle de braquage du véhicule est défini directement sur la base de la position détectée de l'élément de commande (7).

3. Procédé selon la revendication 1, **caractérisé en ce que** la vitesse avec laquelle l'élément de commande (107) est régulée est déterminée, et **en ce que** le processus pour changer l'angle de braquage du véhicule est défini sur la base de la vitesse déterminée de l'élément de commande (107).

4. Procédé selon l'une quelconque des revendications précédentes, **caractérisé en ce que** la pente de la rampe (A, B, C, D, E) est différente pour au moins deux plages de vitesse de véhicule différentes.

5. Procédé selon l'une quelconque des revendications précédentes, **caractérisé en ce que** la vitesse d'angle de braquage est changée avec le temps pour au moins une première plage de vitesse prédéterminée.

6. Procédé selon la revendication 5, **caractérisé en ce que** le changement de vitesse d'angle de braquage est augmenté proportionnellement au temps sur ladite première plage de vitesse.

7. Procédé selon l'une quelconque des revendications précédentes, **caractérisé en ce que** la vitesse d'angle de braquage est changée directement en correspondance avec le déplacement de l'élément de commande pour au moins une seconde plage de vitesse prédéterminée.

8. Procédé selon la revendication 5 ou 6, et la revendication 7, **caractérisé en ce que** la première plage de vitesse prédéterminée est plus basse que la seconde plage de vitesse prédéterminée.

9. Procédé selon l'une quelconque des revendications précédentes, **caractérisé en ce que**, pour provoquer une régulation de l'angle de braquage du véhicule, la position d'une vanne directionnelle (18) est régulée, laquelle vanne directionnelle est adaptée pour réguler l'alimentation d'un fluide à partir d'une pompe (8) vers des moyens (16, 116, 2, 3) pour faire tourner le véhicule.

10. Procédé selon l'une quelconque des revendications précédentes, **caractérisé en ce que** l'angle de braquage du véhicule est régulé via un système constitué d'au moins un vérin hydraulique (2, 3).

11. Procédé selon la revendication 10, **caractérisé en ce que** ledit système de vérin hydraulique est agencé entre une partie de corps avant et une partie de corps arrière (101, 102) du véhicule, lesquelles parties de corps comportent chacune au moins un essieu de roue (103, 104) et sont agencées de manière rotative l'une par rapport à l'autre.

12. Procédé selon l'une quelconque des revendications précédentes, **caractérisé en ce que** le véhicule est constitué d'un engin de chantier.

13. Procédé selon l'une quelconque des revendications précédentes, **caractérisé en ce que** le véhicule est constitué d'une chargeuse à roues.

14. Dispositif pour commander un véhicule (100) comportant un élément de commande (7, 107) destiné à être actionné par le conducteur du véhicule, des moyens (16, 116, 2, 3) pour faire tourner le véhicule et une unité de commande (15, 115) reliée à l'élément de commande et auxdits moyens pour réguler l'angle de braquage du véhicule en fonction de l'actionnement de l'élément de commande, dans lequel le dispositif comporte un système (17, 117) pour détecter la vitesse du véhicule, l'unité de commande (15, 115) est reliée au système de détection, et l'unité de commande est adaptée pour définir un processus pour changer l'angle de braquage du véhicule sur la base de l'actionnement détecté de l'élément de commande et de la vitesse de véhicule détectée et pour amener lesdits moyens pour faire tourner (16, 116, 2, 3) à réguler l'angle de braquage du véhicule conformément au processus défini, **caractérisé en ce que** l'unité de commande (15) est adaptée pour définir la vitesse de changement de l'angle de braquage en fonction de la vitesse de véhicule détectée, **en ce que** l'unité de commande (15) est adaptée pour définir la vitesse de changement de l'angle de braquage selon une relation inverse par rapport à la vitesse de véhicule détectée, **en ce que** l'unité de commande (15, 115) est adaptée pour utiliser une rampe (A, B, C, D, E) au début du processus afin d'atteindre une vitesse de changement d'angle de braquage définie, et **en ce que** la rampe (A, B, C, D, E) est plus courte en termes de temps pour une vitesse de véhicule détectée située dans une plage de vitesse de véhicule plus élevée que dans une plage de vitesse de véhicule plus basse.

15. Dispositif de commande selon la revendication 14, **caractérisé en ce que** le dispositif comporte un détecteur pour détecter la position de l'élément de commande (7), et **en ce que** l'unité de commande (15) est adaptée pour définir le processus pour changer l'angle de braquage du véhicule directement sur la base de la position détectée de l'élément de commande (7).

16. Dispositif de commande selon la revendication 14 ou 15, **caractérisé en ce que** le dispositif comporte des moyens pour déterminer la vitesse avec laquelle l'élément de commande (107) est régulé, et **en ce que** l'unité de commande (115) est adaptée pour définir le processus pour changer l'angle de braquage du véhicule sur la base de la vitesse déterminée de l'élément de commande (107).

17. Dispositif de commande selon l'une quelconque des revendications 14 à 16, **caractérisé en ce que** la rampe (A, B, C, D, E) a une longueur différente en termes de temps pour des plages de vitesse de véhicule différentes.

18. Dispositif de commande selon l'une quelconque des revendications 14 à 17, **caractérisé en ce que** l'unité de commande (15) est adaptée pour changer la vitesse d'angle de braquage avec le temps pour au moins une première plage de vitesse prédéterminée.

19. Dispositif de commande selon la revendication 18, **caractérisé en ce que** l'unité de commande (15) est adaptée pour augmenter le changement de vitesse d'angle de braquage proportionnellement au temps sur ladite première plage de vitesse.

20. Dispositif de commande selon l'une quelconque des revendications 14 à 19, **caractérisé en ce que** l'unité de commande (15) est adaptée pour changer la vitesse d'angle de braquage directement en correspondance avec le déplacement de l'élément de commande pour au moins une seconde plage de vitesse prédéterminée.

21. Dispositif de commande selon la revendication 18 ou 19, et 20, **caractérisé en ce que** la première plage de vitesse prédéterminée est plus basse que la seconde plage de vitesse prédéterminée.

22. Dispositif de commande selon l'une quelconque des revendications 14 à 21, **caractérisé en ce que** le dispositif de commande comporte une vanne directionnelle (18) qui est adaptée pour réguler l'alimentation d'un fluide à partir d'une pompe (8) vers lesdits moyens pour faire tourner (16, 116, 2, 3) et **en ce que** l'unité de commande (15) est reliée à la vanne directionnelle pour réguler sa position dans le but de réguler l'angle de braquage du véhicule.

23. Dispositif de commande selon l'une quelconque des revendications 14 à 22, **caractérisé en ce que** lesdits moyens pour faire tourner (16, 116) comportent un système constitué au moins d'un vérin hydraulique (2, 3) pour changer l'angle de braquage.

24. Dispositif de commande selon la revendication 23, **caractérisé en ce que** ledit système de vérin hydraulique (2, 3) est agencé entre une partie de corps avant et une partie de corps arrière (101, 102) du véhicule, lesquelles parties de corps comportent chacune au moins un essieu de roue (103, 104) et sont agencées de manière rotative l'une par rapport à l'autre.

25. Dispositif de commande selon l'une quelconque des revendications 14 à 24, **caractérisé en ce que** l'élément de commande (7) est constitué d'un levier de commande.

26. Dispositif de commande selon l'une quelconque des revendications 14 à 25, **caractérisé en ce que** l'élément de commande (7) est constitué d'un élément prévu pour tourner, tel qu'un volant de direction.

27. Engin de chantier, **caractérisé en ce qu'**il comporte un dispositif de commande selon l'une quelconque des revendications 14 à 26.

28. Chargeuse à roues, **caractérisée en ce qu'**elle comporte un dispositif de commande selon l'une quelconque des revendications 14 à 26.

29. Programme d'ordinateur comportant des segments de programme d'ordinateur pour amener l'unité de commande du véhicule à effectuer les étapes telles que revendiquées dans l'une quelconque des revendications 1 à 13.
